Europäisches Patentamt

European Patent Office

Office européen des brevets

(11) Veröffentlichungsnummer: **0 405 471 A1**

# (12) EUROPÄISCHE PATENTANMELDUNG

(21) Anmeldenummer: **90112167.3**

(22) Anmeldetag: **26.06.90**

(51) Int. Cl.⁵: **B65G 1/04**

(30) Priorität: **28.06.89 DE 3921123**

(43) Veröffentlichungstag der Anmeldung:
**02.01.91 Patentblatt 91/01**

(84) Benannte Vertragsstaaten:
**GR**

(71) Anmelder: **Kahl, Gerhard**
**Am Gannaberg 14, Langenrehm**
**D-2107 Rosengarten(DE)**

Anmelder: **Pantzer, Gerhard**
**Sieker Landstrasse 169**
**D-2070 Grosshansdorf(DE)**

(72) Erfinder: **Kahl, Gerhard**
**Am Gannaberg 14, Langenrehm**
**D-2107 Rosengarten(DE)**
Erfinder: **Pantzer, Gerhard**
**Sieker Landstrasse 169**
**D-2070 Grosshansdorf(DE)**
Erfinder: **Engelking, Klaus**
**Neu-Glasdorfer Strasse 4**
**D-2953 Rhauderfehn(DE)**

(74) Vertreter: **Glaeser, Joachim, Dipl.-Ing. et al**
**Patentanwalt Königstrasse 28**
**D-2000 Hamburg 50(DE)**

(54) Trolleyfahrzeug zum Ein- und Auslagern von speicherguttragenden Ladungsträgern.

(57) Die Erfindung bezieht sich auf ein Trolleyfahrzeug zum Ein-und Auslagern von speicherguttragenden Ladungsträgern in ein Lager bzw. aus einem Lager heraus, mit mindestens einer Gasse, in der das Trolleyfahrzeug verfahrbar ist, und mit einer vielzahl von Kanälen, die sich zu beiden Seiten einer Gasse in Querrichtung erstrecken, und in denen jeweils eine Mehrzahl von miteinander gekuppelten Ladungsträgern untergebracht sind, wobei an einem an dem Trolleyfahrzeug angeordneten Kettenbalken eine umkehrbar antreibbare Endloskette für das Ein-und Auslagern sowie das An- und Entkuppeln der Ladungsträger vorgesehen ist. Die Erfindung ist dadurch gekennzeichnet, daß der Kettenbalken (20) an dem Trolleyfahrzeug (10) in dessen Querrichtung bewegbar gehaltert (210) und angetrieben (24, 32, 40), vorzugsweise um eine horizontale Achse verschwenkbar oder anhebbar angeordnet ist.

Fig. 3

## TROLLEYFAHRZEUG ZUM EIN- UND AUSLAGERN VON SPEICHERGUTTRAGENDEN LADUNGSTRÄGERN.

Die Erfindung bezieht sich auf ein Trolleyfahrzeug zum Ein-und Auslagern von speicherguttragenden Ladungsträgern in ein Lager bzw. aus einem Lager heraus, mit mindestens einer Gasse, in der das Trolleyfahrzeug verfahrbar ist, und mit einer Vielzahl von Kanälen, die sich zu beiden Seiten einer Gasse in Querrichtung erstrecken, und in denen jeweils eine Mehrzahl von miteinander gekuppelten Ladungsträgern untergebracht ist, wobei an einem an dem Trolleyfahrzeug angeordneten Kettenbalken eine umkehrbar antreibbare Endloskette für das Ein- und Auslagern sowie das An- und Entkuppeln der Ladungsträger vorgesehen ist.

Es sind Lager bekannt, bei denen ein Trolleyfahrzeug in einer Gasse verfahrbar ist. In seitlicher Richtung mündet eine Vielzahl von Kanälen in die Gasse ein, so daß ein Ladungsträger, der auf dem Trolleyfahrzeug transportiert wird, an irgendeinen der Anfangsplätze der Kanäle abgesetzt werden kann. Häufig werden als Ladungsträger Rollwagen oder Rollpaletten eingesetzt, die den Vorteil haben, daß Sie über eine Eigenbeweglichkeit verfügen. Dies bedingt dann aber, daß die einzelnen Rollpaletten in den Kanälen festgesetzt werden müssen, so daß nicht versehentlich die an den Anfangsplätzen abgesetzten Rollwagen der Kanäle in die Gasse hineinragen. Da das Trolleyfahrzeug immer nur den Ladungsträger erreichen kann, der am Anfangsplatz eines Kanals steht, ist es zweckmäßig, daß die einzelnen Rollwagen oder Rollpaletten eines Kanals miteinander gekuppelt sind. Dadurch können alle Ladungsträger bzw. Rollpaletten eines Kanals mit Hilfe eines Trolleyfahrzeuges erreicht werden,auch wenn dieses immer nur die Anfangsplätze der Kanäle bedient.

Es liegt auf der Hand, daß die Arbeitsgeschwindigkeit, mit der Speichergut ein- oder aussortiert werden kann, wesentlich von der Geschwindigkeit abhängig ist, mit der das Trolleyfahrzeug in der Gasse verfahrbar ist. Einer hohen Geschwindigkeit steht jedoch die Gefahr entgegen, daß aus den Kanälen herausragende Ladungsträger mit dem sich in Querrichtung bewegenden Trolleyfahrzeug kollidieren. . Aber selbst, wenn eine einwandfreie Arrettierung der jeweils ersten Ladungsträger in einem Kanal sichergestellt ist, so benötigt der Kupplungs- und Entkupplungsvorgang Zeit, was wiederum die Geschwindigkeit herabsetzt, mit der Speichergut ein- oder aussortiert werden kann.

Bei einer bekannten Lösung werden zum Ein- und Ausfahren von Ladungsträger in die Kanäle vom Trolleyfahrzeug her Rollen seitlich ausgeschwenkt, die einerseits dazu dienen, daß Ladungsträger aus der Gasse in den Kanal hineingefahren werden können, und andererseits die Aufgabe übernehmen, den Kupplungsvorgang zwischen den nebeneinanderstehenden Ladungsträgern zu ermöglichen. Diese Lösung ist einerseits platzaufwendig, zum anderen muß berücksichtigt werden, daß das seitliche Ausfahren von Tragteilen nur über zusätzliche Antriebe möglich ist, was wiederum die Wirtschaftlichkeit der Lagereinrichtung beeinträchtigt.

Durch die Erfindung soll hier Abhilfe geschaffen werden, insbesondere soll ein Trolleyfahrzeug der eingangs genannten Art so ausgestaltet werden, daß durch relativ einfache Bewegungen der Teile des Trolleyfahrzeuges sowohl das Ein-und Auskuppeln von Ladungsträgern als auch das Ein- und Aussortieren der Ladungsträger ermöglicht wird.

Erreicht wird dies dadurch, daß bei einem Trolleyfahrzeug der eingangs genannten Art der Kettenbalken an dem Trolleyfahrzeug in Querrichtung bewegbar oder verschwenkbar gehaltert und angetrieben ist.

Eine weitere Ausführungsform der Erfindung ist dadurch gekennzeichnet, daß daß der Antrieb für die Bewegung des Kettenbalkens in Querrichtung des Trolleyfahrzeuges aus folgenden Elementen gebildet ist:
aus einer am Trolleyfahrzeug befestigten oder angelenkten Zahnstange, in der ein am Kettenbalken gelagertes Ritzel kämmt, welches zum Zwecke des Ein- und Auslagern eines Ladungsträgers antreibbar ist und aus zwei an der Kette angebrachten Mitnehmern, die wechselweise für den Transport eines Ladungsträgers in der einen oder der anderen Richtung mit diesem in Eingriff treten und den Ladungsträgern zusammen mit dem Kettenbalken in der einen oder der anderen Querrichtung entsprechend bewegen.

Eine weitere Ausführungsform der Erfindung ist dadurch gekennzeichnet, daß das Ritzel über den Kettenantrieb vermittels einer Kupplung und einer Bremse antreibbar bzw. feststellbar ist.

Weiterhin ist eine Ausführungsform der Erfindung dadurch gekennzeichnet, daß daß das Antriebsritzel für die Kette und das Ritzel für den Bewegungsantrieb des Kettenbalkens gleiche Teilkreisdurchmesser haben.

Eine andere Ausführungsform der Erfindung ist dadurch gekennzeichnet, daß die Mitnehmer jeweils als Klinke oder Doppelklinke an mindestens einer Mitnehmerbrücke und die Kette als Doppelkette ausgebildet sind.

Es ist auch eine Ausführungsform dadurch gekennzeichnet, daß zwecks Transport des Ladungsträgers in den seitlichen Bereichen zwischen Trolleyfahrzeug und Anfang der Kanäle und zwecks An- und Entkuppeln der einzelnen Ladungsträger seitlich am Trolleyfahrzeug jeweils eine Anhebeeinrichtung für die Kette, den Kettenbalken, Lenkerflügel oder dergl. vorgesehen ist.

Eine weitere Ausführungsform der Erfindung ist dadurch gekennzeichnet, daß die Anhebeeinrichtung als Kettenrolle ausgebildet ist, die auf einer Welle gehaltert ist, die ihrerseits bei seitlicher Bewegung des Kettenbalkens mit einer am Trolleyfahrzeug ausgebildeten schiefen Ebene, einem Antriebsnocken, einer Kulisse, einer Spur oder dergl. in Eingriff tritt.

Weiterhin ist eine Ausführungsform der Erfindung dadurch gekennzeichnet, daß die Anhebeeinrichtung als Rolle ausgebildet ist, die am Kettenbalken gelagert ist und bei seitlicher Bewegung des Kettenbalkens mit einer am Trolleyfahrzeug ausgebildeten schiefen Ebene, einem Antriebsnocken, einer Kulisse, einer Spur oder dergl. in Eingriff tritt.

Eine weitere Ausführungsform der Erfindung ist dadurch gekennzeichnet, daß die Anhebeeinrichtung aus Flügeln gebildet ist, die am Trolleyfahrzeug verschwenkbar angelenkt sind und bei seitlicher Bewegung des Kettenbalkens über an ihm angebrachte Druckrollen so verschwenkbar sind, daß sie den entsprechenden Ladungsträger anheben.

Das Wesen der vorliegenden Erfindung beruht vor allem darin, daß der Antrieb für die Kette zusätzlich dazu eingesetzt wird, unter bestimmten Bedingungen den Kettenbalken relativ zum Fahrgestell des Fahrzeuges zu bewegen oder zu verschwenken. Dadurch wird ermöglicht, daß ein Ladungsträger aus der Gasse heraus in einen Kanal eingefahren werden kann, ohne daß irgendwelche weiteren Antriebe und Vorkehrungen erforderlich sind.

Durch Zusammenwirken von Teilen des Kettenbalkens mit einem Nocken oder einer schiefen Ebene kann zusätzlich auch der Kupplungsvorgang bewerkstelligt werden, indem die beiden miteinander zu verbindenden Fahrzeuge in Höhenrichtung zueinander verstellt werden.

Die Erfindung wird nachstehend anhand der Zeichnung beispielsweise erläutert.

Fig. 1 zeigt eine schematische Seitenansicht eines Trolleyfahrzeuges gemäß der Erfindung.

Fig. 2 zeigt eine Schnittansicht des in Fig. 1 gezeigten Trolleyfahrzeuges nach II-II.

Fig. 3 zeigt eine Ausführungsform eines Trolleyfahrzeuges mit Flügeln als Anhebeeinrichtung.

Fig. 4 zeigt eine zu Fig. 3 ähnliche Darstellung eines Trolleyfahrzeuges, jedoch zu dem Zeitpunkt, an dem ein Ladungsträger aus seiner Arretierung im Kanal genommen und mit einem anderen Ladungsträger gekuppelt wird.

Fig. 5 zeigt eine schematische Seitenansicht eines Trolleyfahrzeuges gemäß der Erfindung in einer abgewandelten Ausführungsform.

Fig. 6 zeigt eine Schnittansicht der in Fig. 5 gezeigten Ausführungsform des Trolleyfahrzeuges.

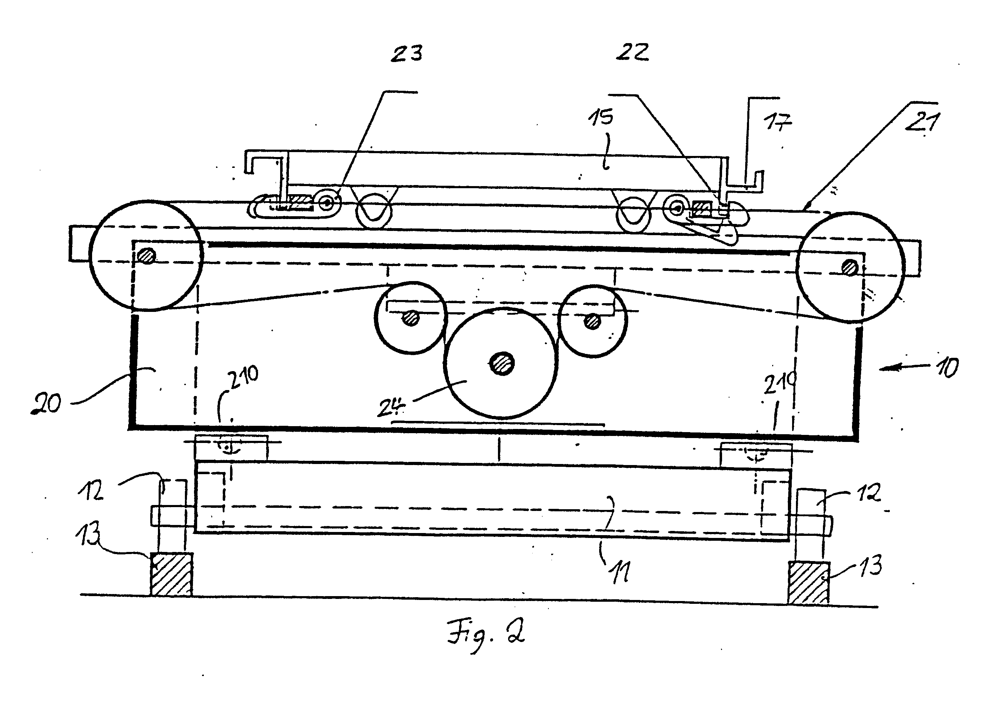

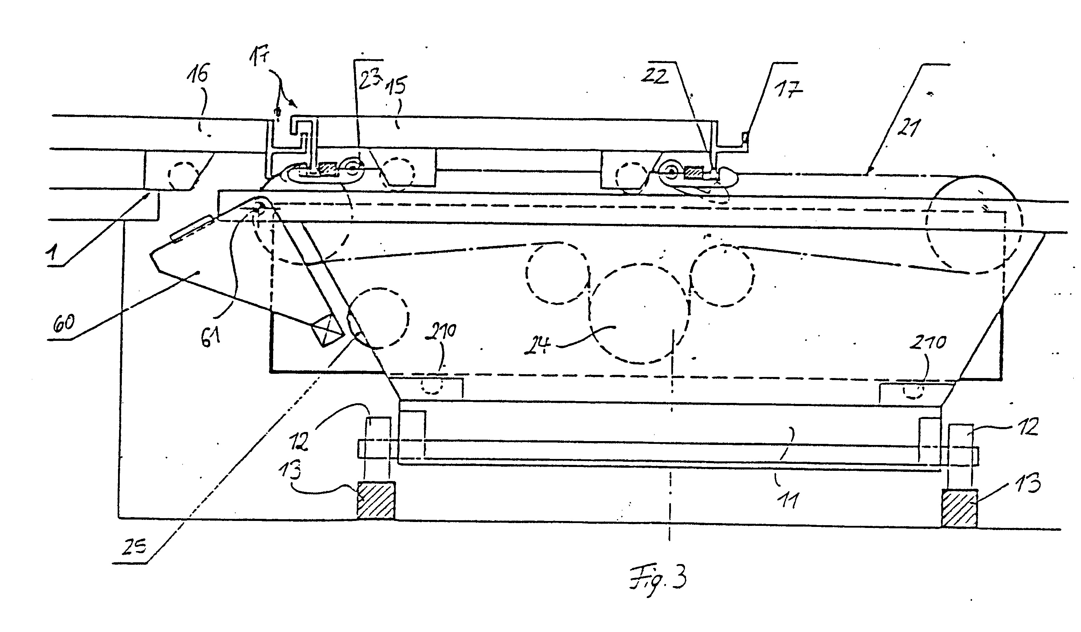

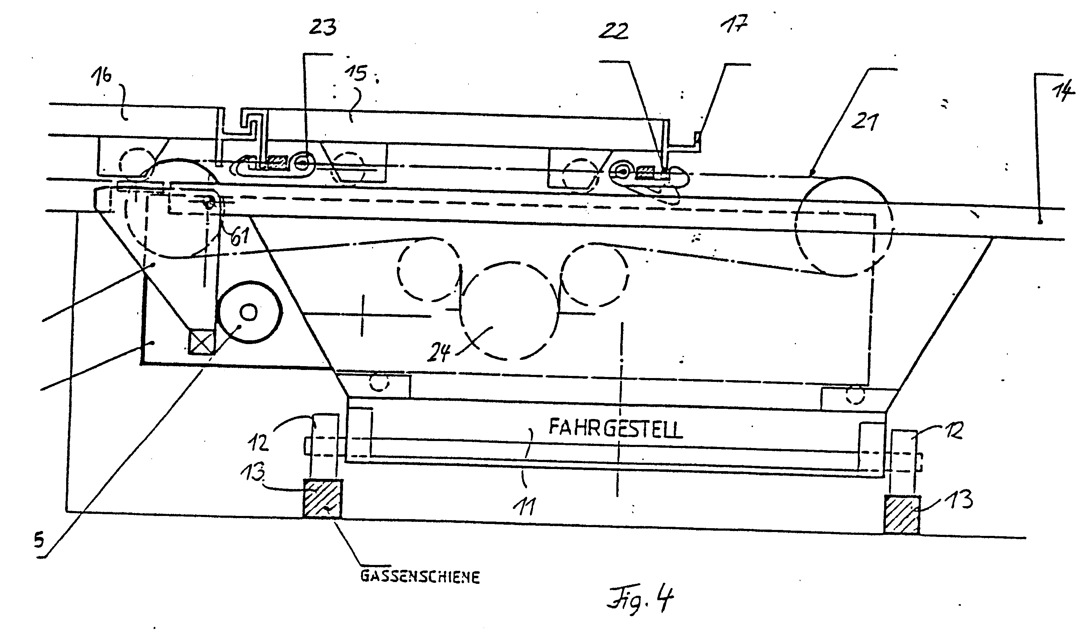

In den Figuren ist mit 10 ein Trolleyfahrzeug gezeigt, welches auf zwei im Abstand angeordneten Schienen 13 über Räder 12 verfahrbar ist. Bei Betrachtung der Figuren 2 bis 4 verlaufen die Schienen senkrecht zur Papierebene, wobei sich zur Linken und zur Rechten des Trolleyfahrzeuges 10 die einzelnen Kanäle befinden. Fig. 3 zeigt linksseitig einen Kanal mit einer Kanalschiene 70, auf welcher ein Ladungsträger 16 ruht. In Fig. 3 ist zu erkennen, daß nur die hinteren Räder, die linksseitig gezeigten, des Ladungsträgers 16 auf der Kanalschiene rollen, während die rechtsseitigen Räder frei sind und die Halterung des Rades auf der Kanalschiene 70 aufruht. Auf diese Art und Weise ist eine Arretierung für den Ladungsträger 16 geschaffen worden, so daß sich dieser an genau definierter Lage in seinem Kanal und auch relativ zur Gasse befindet. Selbstverständlich können auch andere Arten der Arretierung von Ladungsträgern in den Gassen im Zusammenhang mit der vorliegenden Erfindung realisiert werden.

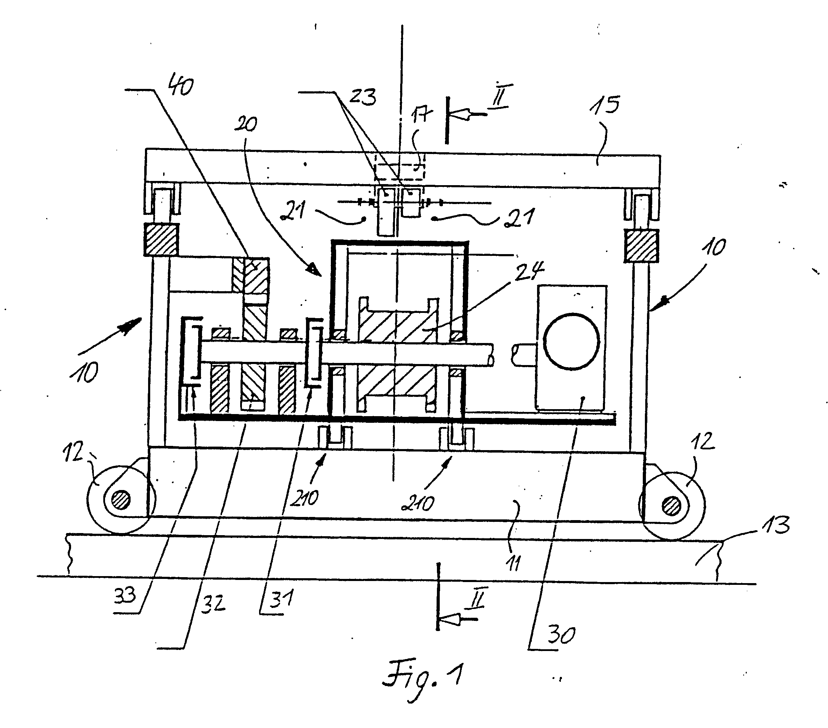

Bei dem Trolleyfahrzeug 10, so wie es in Fig. 1 gezeigt ist, erstrecken sich die Gassenschienen 13 von links nach rechts.

Es sind nur die wesentlichen Teile des Trolleyfahrzeuges gezeigt worden, so zum Beispiel das Fahrgestell 11, welches über nicht gezeigte Einrichtungen in der Gasse bewegbar ist. Auf dem Trolleyfahrzeug 10 ruht ein mit 20 bezeichneter Kettenbalken, und zwar so, daß dieser Kettenbalken 20 seitlich in bezug auf das Trolleyfahrzeug 10 bewegbar ist, was durch Rollen oder Räder 210 angedeutet ist. Der Kettenbalken 20 trägt eine Mehrzahl von Rollen, die im einzelnen nicht mit Bezugszeichen versehen sind. Die Rollen für eine Kette oder, wie aus Fig. 1 ersichtlich, zwei Ketten 21, die über Kettenglieder und Brücken miteinander verbunden sind. Die Kette ist über ein Kettenritzel 24 in beiden Richtungen antreibbar, hierzu dient der in Fig. 1 gezeigte Antrieb 30.

In Fig. 2 sind Mitnehmerteile bzw. Doppelklinken 22 und 23 gezeigt. Diese Mitnehmer sind an Brücken der Kette 21 befestigt, und können mit Haken oder Teilen der Ladungsträger in Eingriff gebracht werden, so daß ein Ladungsträger 15 in die eine oder die andere Querrichtung (nach links bzw. rechts bei Betrachtung der Fig. 2 bis 4) bewegt werden können.

Die Ladungsträger 15 und 16 ruhen dabei auf Schienen, die wiederum am Trolleyfahrzeug 10 befestigt sind, so wie dies aus Fig. 1, links und rechts oben, zu erkennen ist.

Normalerweise wird eine Querbewegung des Ladungsträgers 15 dadurch bewerkstelligt, daß der Motor 30 das Kettenritzel 24 antreibt. Da die Kupplung 31 offen ist, findet tatsächlich eine reine Umlaufbewegung der Kette 21 um die Kettenräder in der vorgegebenen Richtung statt, was zu einer Relativbewegung des Ladungsträgers relativ zum Trolleyfahrzeug 10, aber auch relativ zum Kettenbalken 20, führt.

Wird nun aber die Kupplung 31 eingelegt und gleichzeitig die bislang festgezogene Bremse 33 gelöst, so findet bei einer Drehbewegung des Kettenritzels 24 gleichzeitig eine Drehbewegung des Zahnritzels 32 statt. Da dieses in einer Zahnstange 40 kämmt, die wiederum an dem Trolleyfahrzeug 10 ortsfest befestigt ist, ergibt sich zwangsläufig eine Relativbewegung zwischen dem Kettenbalken 20 und dem Trolleyfahrzeug 10. Bei gleichen Teilungsdurchmessern von Kettenritzel 24 und Zahnritzel 32 findet auch keine Differenzbewegung statt. Die Folge ist hierbei jedoch, daß der Kettenbalken 20 zusammen mit dem Ladungsträger 15 nach links oder rechts bei Betrachtung der Figuren 2 bis 3 bewegt wird. Es ist diese Relativbewegung zwischen Ladungsträger 15 bzw. Kettenbalken 20 relativ zum Trolleyfahrzeug 10, die gemäß der Erfindung ausgenützt wird, um einen Ladungsträger seitlich aus der Gasse in einen Kanal hinein- und aus diesem herauszufahren.

Nachfolgend wird die Figur 3 betrachtet, die eine Ausführungsform der Erfindung zeigt, und zwar im Hinblick auf eine Anhebeeinrichtung. Diese besteht aus seitlich am Trolleyfahrzeug 10 angebrachten Flügeln 60, welche bei 61 angelenkt sind. Figur 3 zeigt die Lage, in der das Trolleyfahrzeug ungehindert durch die Gasse fahren kann, ohne daß irgendwelche Kollisionen zu befürchten sind. Allerdings ist der Ladungsträger 15 bereits mit Hilfe des Antriebes für den Kettenbalken 20 etwas nach links, und zwar in die Einkupplungslage mit dem Ladungsträger 16 gebracht worden, Bei weiterer Bewegung des Kettenbalkens 20 nach links, tritt eine Druckrolle 25, die am Kettenbalken 22 befestigt ist, mit dem nach unten hängenden Teil der Flügel 60 in Eingriff und verschwenkt die Flügel in Uhrzeigerrichtung. Ein am oberen Teil des Flügels angebrachter Auflageteil tritt dann mit den vorderen Rädern des Ladungsträgers 16 in Eingriff und hebt schließlich den Ladungsträger 16 um ein solches Stück an, daß der Ladungsträger 16, aber auch der Ladungsträger 15, miteinander nach links, bei Betrachtung der Fig, 4, bewegt werden können.

Es zeigt sich, daß durch das Trolleyfahrzeug gemäß der Erfindung diese Kupplungsvorgänge, aber auch das Ein- und Ausfahren bewerkstelligt werden können, ohne daß es eines zusätzlichen Antriebes bedarf. Es wird lediglich der Antrieb für die Kette 21 herangezogen und über Kupplung 31 und Bremse 33 über das Zahnritzel 32 und die Zahnstange 40 so übertragen, daß eine Relativbewegung zwischen Kettenbalken 20 und Trolleyfahrzeug 10 stattfindet. Aus dieser Relativbewegung wird die Transportbewegung für die Ladungsträger 15 und 16 und auch für die Betätigung der Arrettierung hergeleitet.

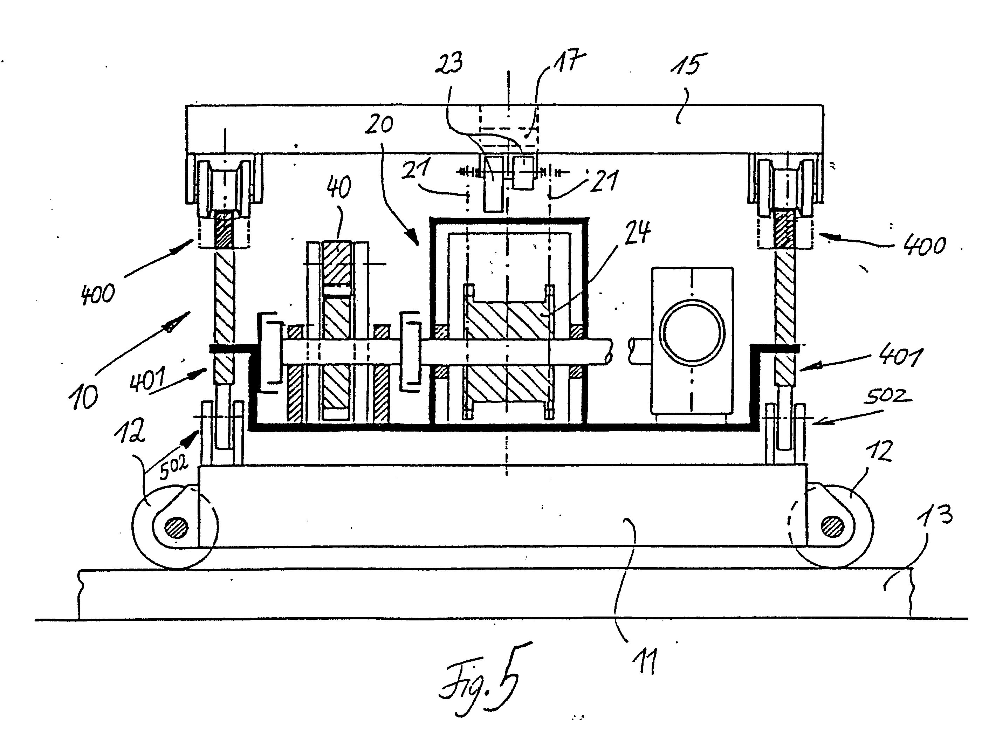

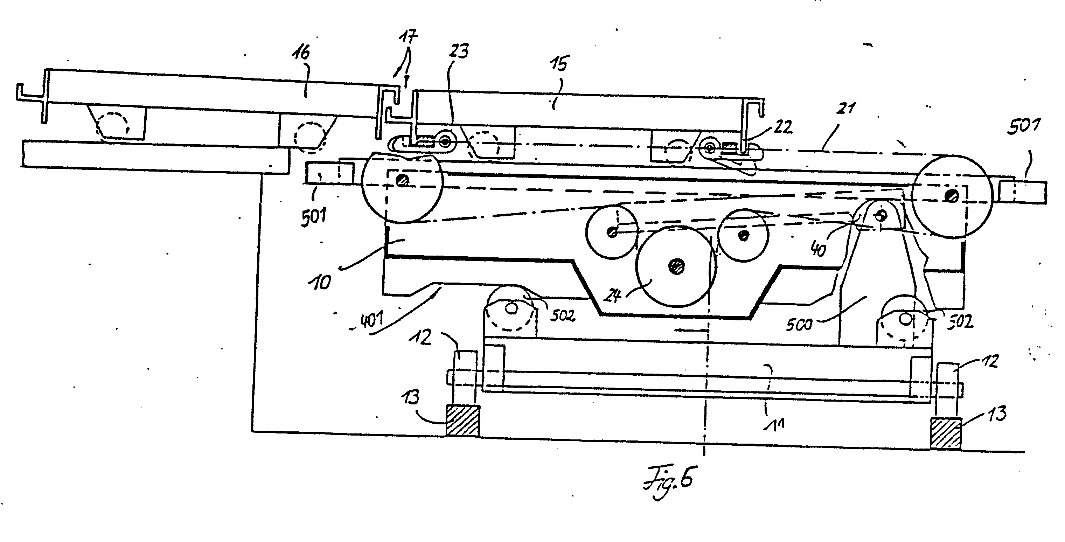

In der in den Figuren 5 und 6 gezeigten Ausführungsform sind für die bislang beschriebenen Teile die gleichen Bezugszahlen gewählt worden. Daher werden nur die zusätzlichen Teile erläutert, die die Ausführungsform nach den Figuren 5 und 6 charakterisieren.

Nach dieser Ausführungsform der Erfindung ruht der Kettenbalken 10 nicht auf einer ebenen Unterlage auf dem Trolleyfahrzeug 11. Vielmehr befinden sich auf dem Trolleyfahrzeug 11 vier Rollen 502, auf denen die Unterseite des Kettenbalkens 10 aufruht. Nun ist die Unterseite mit Ausnehmungen ausgebildet, so daß bei Bewegung des Kettenbalkens 10 dieser eine Absenk- bzw. Anhebebewegung durchführen kann. Dies wird bei Betrachtung der Fig. 6 deutlich, wenn man sich vorstellt, daß der Kettenbalken 10 eine nach links gerichtete Bewegung durchführt. Eine solche Bewegung bedingt eine linksseitige Anhebung des Kettenbalkens 10, so daß ein fest mit dem Kettenbalken 10 verbundenes Verlängerungsschienenstück 501 mit den freihängenden Rollen des Ladungsträgers 16 in Eingriff tritt und diesen Ladungsträger 16 anhebt. Gleichzeitig wird eine durchlaufende Schiene für den Ladungsträger 15 zur Verfügung gestellt, so daß dieser, wenn die Klinken 23 mit der Kette 21 in Eingriff gebracht worden sind, nach links in das Lager eingefahren werden kann. Bedingt durch die Anhebe- bzw. Schwenkbewegung des Kettenbalkens 10 ist die Zahnstange 40 verschwenkbar am Trolleyfahrzeug angelenkt, und zwar an einem Gelenkblock 500.

In den Figuren sind die Mitnehmer bzw. Haken schematisch dargestellt, die eingesetzt werden können, damit die ortsfesten Ladungsträger von der sich bewegenden Kette mitgenommen werden können. Derartige Einrichtungen sind aus der Fördertechnik bekannt. Für die Erfindung ist wesentlich, daß solche Mitnehmer eingesetzt werden können, welche eine verhältnismäßig geringe Öffnungsweite aufweisen, so daß ein genaues Positionieren der Ladungsträger möglich ist. Weiterhin bevorzugt werden dann solche Mitnehmer, die darüber hinausgehend auch eine größere Öffnungsweite aufweisen, so daß ein leichtes Einbringen des Mitnehmers des Ladungsträgers möglich ist.

## Ansprüche

1. Trolleyfahrzeug zum Ein- und Auslagern von speicherguttragenden Ladungsträgern in ein Lager bzw. aus einem Lager heraus, mit mindestens einer Gasse, in der das Trolleyfahrzeug verfahrbar ist, und mit einer Vielzahl von Kanälen, die sich zu beiden Seiten einer Gasse in Querrichtung erstrecken, und in denen jeweils eine Mehrzahl von miteinander gekuppelten Ladungsträgern untergebracht sind, wobei an einem an dem Trolleyfahrzeug angeordneten Kettenbalken eine umkehrbar antreibbare Endloskette für das Ein- und Auslagern sowie das An- und Entkuppeln der Ladungsträger Vorgesehen ist, dadurch gekennzeichnet, daß der Kettenbalken (20) an dem Trolleyfahrzeug (10) in dessen Querrichtung bewegbar gehalten (210) und angetrieben (24, 32, 40), vorzugsweise um eine horizontale Achse verschwenkbar oder anhebbar angeordnet ist.

2. Trolleyfahrzeug nach Anspruch 1, dadurch gekennzeichnet, daß der Antrieb für die Bewegung des Kettenbalkens in Querrichtung des Trolleyfahrzeuges (10) aus folgenden Elementen gebildet ist: aus einer am Trolleyfahrzeug (10) befestigten oder zu dieser verschwenkbaren Zahnstange (40), in der ein am Kettenbalken (20) gelagertes Ritzel (32) kämmt, welches zum Zwecke des Ein- und Auslagern eines Ladungsträgers (15, 16) antreibbar ist und aus zwei an der Kette (21) angebrachten Mitnehmern (22, 23), die wechselweise für den Transport eines Ladungsträgers (15, 16) in der einen oder der anderen Richtung mit diesem (15, 16) in Eingriff treten und den Ladungsträgern zusammen mit dem Kettenbalken (20) in der einen oder der anderen Querrichtung entsprechend bewegen.

3. Trolleyfahrzeug nach Anspruch 2, dadurch gekennzeichnet, daß das Ritzel (32) über den Kettenantrieb (30) vermittels einer Kupplung (31) und einer Bremse (33) antreibbar bzw. feststellbar ist.

4. Trolleyfahrzeug nach Anspruch 3, dadurch gekennzeichnet, daß das Antriebsritzel (24) für die Kette (21) und das Ritzel (32) für den Bewegungsantrieb des Kettenbalkens (20) gleiche Teilkreisdurchmesser haben.

5. Trolleyfahrzeug nach einem der Ansprüche 2 bis 4, dadurch gekennzeichnet, daß die Mitnehmer (22, 23) jeweils als Klinke oder Doppelklinke an mindestens einer Mitnehmerbrücke und die Kette (21) als Doppelkette ausgebildet sind.

6. Trolleyfahrzeug nach einem der Ansprüche 1 bis 5, dadurch gekennzeichnet, daß zwecks Transport des Ladungsträgers (15, 16) in den seitlichen Bereichen zwischen Trolleyfahrzeug (10) und Anfang der Kanäle und zwecks An-und Entkuppeln der einzelnen Ladungsträger (15, 16) für beide Seiten des Trolleyfahrzeug (10) jeweils eine Anhebeeinrichtung für die Kette (21), oder für Lenkerflügel oder dergl. oder eine Schwenkeinrichtung ( 401, 502) für den Kettenbalken vorgesehen ist.

7. Trolleyfahrzeug nach Anspruch 6, dadurch gekennzeichnet, daß die Anhebe- bzw. Schwenkeinrichtung entweder als Kettenrolle ausgebildet ist, die auf einer Welle gehalten ist, die ihrerseits bei seitlicher Bewegung des Kettenbalkens (20) mit einer am Trolleyfahrzeug (10) ausgebildeten schiefen Ebene, einem Antriebsnocken, einer Kulisse, einer Spur oder dergl.. in Eingriff tritt, oder als am Trolleyfahrzeug (11) belagerte Rolle (502) ausgebildet ist, die mit einer Kulisse (401) oder dergl. am Kettenbalken (10) zusammenwirkt.

8. Trolleyfahrzeug nach Anspruch 6, dadurch gekennzeichnet, daß die Anhebeeinrichtung als Rolle ausgebildet ist, die am Kettenbalken (20) gelagert ist und bei seitlicher Bewegung des Kettenbalkens mit einer am Trolleyfahrzeug (20) ausgebildeten schiefen Ebene, einem Antriebsnocken, einer Kulisse, einer Spur oder dergl. in Eingriff tritt.

9. Trolleyfahrzeug nach einem der Ansprüche 1 bis 6, dadurch gekennzeichnet, daß die Anhebeeinrichtung aus Flügeln (60) gebildet ist, die am Trolleyfahrzeug (10) verschwenkbar angelenkt sind und bei seitlicher Bewegung des Kettenbalkens (20) über an ihm angebrachte Druckrollen (25) so verschwenkbar sind, daß sie den entsprechenden Ladungsträger (16) anheben.

Fig. 1

Fig. 2

EP 0 405 471 A1

Fig. 3

Fig. 4

FAHRGESTELL

GASSENSCHIENE

Fig. 5

Fig.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 244 232 (ELEVATOR) <br> * Zusammenfassung; Seite 6, Zeilen 2-26; Figuren 1-6 * | 1 | B 65 G 1/04 |
| A | | 2,5 | |
| | --- | | |
| A | WO-A-8 103 653 (W. THEOBALD) <br> * Seite 8, Zeilen 7-24; Figur 2 * | 1,2,5-7 | |
| | --- | | |
| A | DE-A-3 617 098 (DYTAN) <br> * Spalte 2, Zeilen 14-43; Figur 6 * | 1,6,9 | |
| | --- | | |
| A | DE-A-3 407 099 <br> (WERKZEUGMASCHINENKOMBINAT) <br> * Zusammenfassung; Figuren 1-4 * | 1,2,5 | |
| | ----- | | |

RECHERCHIERTE
SACHGEBIETE (Int. Cl.5)

B 65 G
B 66 F

Der vorliegende Recherchenbericht wurde für alle Patentansprüche erstellt

| Recherchenort | Abschlußdatum der Recherche | Prüfer |
|---|---|---|
| BERLIN | 18-09-1990 | WESTERMAYER W G |